# EUROPÄISCHE PATENTSCHRIFT

(11) **EP 2 505 892 B1**
(45) Veröffentlichungstag und Bekanntmachung des Hinweises auf die Patenterteilung: **27.04.2016**
(21) Anmeldenummer: 12000204.3
(22) Anmeldetag: 14.01.2012
(51) Int. Cl.: F16L 9/06, F16L 11/11, F16L 11/118, F16L 11/15

(54) **Richtungsgebundene Fluidleitung**
Directional flow fluid conduit
Conduite de fluide à sens d'écoulement préférentiel

(30) Priorität: 29.03.2011 DE 102011015388
(43) Veröffentlichungstag der Anmeldung: 03.10.2012
(73) Patentinhaber: NORMA Germany GmbH, 63277 Maintal (DE)
(72) Erfinder: Bauer, Andreas, 63785 Obernburg (DE); Steinkamp, Christoph, 63599 Biebergemünd (DE); Anders, Martin, 31174 Schellerten (DE)
(74) Vertreter: Patentanwälte Olbricht Buchhold Keulertz

(56) Entgegenhaltungen:
- DE-A1- 1 775 513
- FR-A- 1 385 986
- JP-A- 2004 076 929
- JP-A- 2006 046 378
- JP-A- 2009 150 458
- US-A- 5 850 855

## Beschreibung

Die Erfindung betrifft eine Fluidleitung mit einer Innenkontur, die Wellenberge und Wellentäler aufweist, wobei die Wellenberge jeweils eine Vorderflanke und eine Rückflanke aufweisen.

Die FR1385986 offenbart den Oberbegriff von Anspruch 1. Weitere Fluidleitungen ähnlicher Art sind aus JP2004076929, JP2009150458, JP2006046378, DE1775513 und US5850855 bekannt.

Derartige Fluidleitungen werden beispielsweise als Wellrohre bezeichnet. Dabei ist nicht nur die Innenkontur mit Wellenbergen und Wellentäler versehen, sondern auch die Außenkontur. Eine derartige Ausbildung soll eine flexible Fluidleitung ermöglichen, die insbesondere mit relativ kleinen Radien gebogen werden kann. Durch die Wellenberge und Wellentäler der Innenkontur, also durch die nach innen vorstehenden Wellenberge, kommt es jedoch zu einer Störung einer Fluidströmung. Derartige Leitungen weisen daher einen relativ hohen Strömungswiderstand auf.
Der Erfindung liegt nun die Aufgabe zugrunde, Strömungsverluste klein zu halten.

Erfindungsgemäß wird diese Aufgabe durch eine Fluidleitung mit den Merkmalen von Anspruch 1 gelöst.

Bei dieser Ausbildung wird ausgenutzt, dass eine Strömungsrichtung in der Fluidleitung in der Regel konstant ist. Durch die relativ flach ansteigende Vorderflanke erfolgt nur ein geringes Abbremsen eines durchströmenden Fluids. Durch die relativ steil abfallende Rückflanke wird die axiale Erstreckung des Wellenberges dennoch gering gehalten, so dass eine ausreichende Flexibilität der Fluidleitung erhalten bleibt. Dabei kann durch die relativ steile Rückflanke das Ausbilden einer quasi stationären Grenzschicht verhindert werden. Dies führt ebenfalls zu einem relativ geringen Strömungswiderstand der Fluidleitung.

Bevorzugterweise ist die Fluidleitung als Wellrohr ausgebildet und weist eine Außenkontur auf, die parallel zur Innenkontur verläuft. Dadurch wird eine sehr flexible Fluidleitung erhalten. Dabei kann auch von außen bereits erkannt werden, in welcher Richtung eine strömungswiderstandsarme Durchströmung möglich ist, was also die bevorzugte Durchströmungsrichtung ist. Eine Fehlmontage wird dadurch erschwert.

Vorzugsweise weist die Vorderflanke einen Neigungswinkel im Bereich von 50° bis 70° und die Rückflanke einen Neigungswinkel im Bereich von 80° bis 90° auf. Der Neigungswinkel wird dabei zwischen einer Rotations- oder Symmetrieachse der Fluidleitung und der Vorderflanke bzw. der Rückflanke gemessen. Die Rotationsachse läuft dabei parallel zur Durchflussrichtung. Die Vorderflanke und die Rückflanke sind dabei in der Regel radial umlaufend ausgebildet. Durch einen entsprechenden Neigungswinkel der Vorderflanke und den entsprechend größeren Neigungswinkel der Rückflanke ergibt sich ein optimiertes Strömungsverhalten. Strömungsverluste werden dadurch minimiert.

Vorzugsweise ist die Vorderflanke konvex ausgebildet. Die Vorderflanke ist also nach innen gekrümmt. Dadurch erfolgt zunächst ein relativ starkes Ansteigen der Vorderflanke ausgehend vom Wellental, während die Vorderflanke dann gleichmäßig in eine Spitze des Wellenbergs übergeht. Damit erfolgt ein möglichst wirbelfreier Übergang.

Vorzugsweise ist die Rückflanke eben ausgebildet. Die Rückflanke weist also weder eine konvexe, noch eine konkave Krümmung aus. Dadurch ergibt sich zum einen eine genaue definierte Abrisskante und zum anderen eine recht einfache Ausbildung.

Erfindungsgemäß sind eine Spitze des Wellenbergs und das Wellental plateauförmig ausgebildet. Die Spitze des Wellenbergs und das Wellental verlaufen damit bereichsweise parallel zur Durchflussrichtung. Dadurch kann eine gute Führung des Fluids erfolgen. Gleichzeitig kann durch die axiale Länge der plateauförmigen Spitze und des Wellentals die Flexibilität der Fluidleitung gesteuert werden.

Dabei weist die Spitze eine größere axiale Erstreckung als das Wellental auf. Damit wird der Einfluss der Wellentäler auf das durchströmende Fluid gering gehalten. Ein Strömungsquerschnitt bestimmt sich im Wesentlichen durch den maximal möglichen, freien Querschnitt, der zwischen den Wellenbergen ausgebildet ist. Der Einfluss der Wellentäler ist dabei relativ gering, zumal ein Übergang von den Wellentälern in die Wellenberge mit einem relativ flachen Neigungswinkel erfolgt. Die relativ steile Rückflanke und das kurze, plateauförmige Wellental werden dabei ausgenutzt, Turbulenzen zu erzeugen, um so das Ausbilden einer quasi stationären Grenzschicht zwischen dem durchströmenden Fluid und einer Innenfläche der Fluidleitung zu vermeiden. Insgesamt werden so geringe Strömungsverluste erhalten. Bevorzugterweise ist die Fluidleitung als extrudiertes Kunststoffrohr, insbesondere als extrudiertes Polyamidrohr ausgebildet. Damit wird eine Fluidleitung erhalten, die zum einen sehr lösungsmittelbeständig ist, zum anderen aber eine ausreichende Flexibilität aufweist, wobei gleichzeitig eine hohe Haltbarkeit erhalten wird. Die Fluidleitung ist damit sowohl relativ kostengünstig herstellbar, als auch vielseitig einsetzbar. Die gewünschte Innenkontur lässt sich dabei mit Hilfe eines Extrusionsverfahrens relativ einfach und damit kostengünstig herstellen.

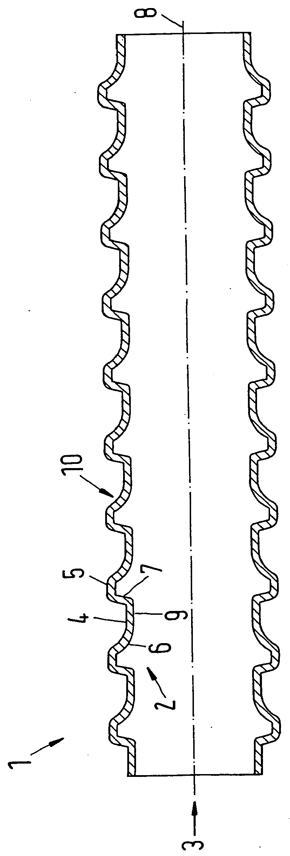

Die Erfindung wird im Folgenden anhand eines bevorzugten Ausführungsbeispiels in Verbindung mit der Zeichnung beschrieben. Hierin zeigt:
- die einzige Fig.: Einen Querschnitt durch eine Fluidleitung.

In der einzigen Figur ist eine Fluidleitung 1 dargestellt, die als Wellrohr ausgebildet ist. Dabei weist die Fluidleitung 1 eine Innenkontur 2 auf, die im Hinblick auf eine vorgegebene Durchströmungsrichtung strömungsoptimiert ist. Die Strömungsrichtung ist durch einen Pfeil 3 symbolisiert.

Die Innenkontur 2 weist Wellenberge 4 und Wellentäler 5 auf. Dabei ist jedem Wellenberg 4 eine Vorderflanke 6 und eine Rückflanke 7 zugeordnet. Ein Neigungswinkel der Vorderflanke 6 ist dabei geringer als ein Neigungswinkel der Rückflanke 7. Der Neigungswinkel entspricht einem Winkel zwischen der Durchströmungsrichtung und der jeweiligen Flanke 6, 7. Da die Fluidleitung 1 in der Regel rotationssymmetrisch ausgebildet ist, verläuft eine Rotationsachse 8 parallel zur Strömungsrichtung 3. Der Neigungswinkel kann also auch zwischen der Vorderflanke 6 bzw. der Rückflanke 7 und der Rotationsachse 8 abgegriffen werden.

Im vorliegenden Fall ist die Vorderflanke 6 konvex ausgebildet. Die Rückflanke 7 weist hingegen einen Neigungswinkel von etwa 85° auf. Aufgrund der konvexen Ausbildung der Vorderflanke 6 ändert sich der Neigungswinkel der Vorderflanke 6, wobei der Neigungswinkel ausgehend vom Wellental 4 zunächst relativ steil ist, um anschließend abzuflachen. Ein mittlerer Neigungswinkel beträgt etwa 60°.

Das Wellental 5 erstreckt sich über eine gewisse axiale Länge plateauförmig und dabei parallel zur Rotationsachse 8. Eine Wellenspitze 9 des Wellenbergs 4 verläuft ebenfalls plateauförmig und parallel zur Rotationsachse 8. Dabei erstreckt sich die Spitze 9 axial weiter als das Wellental 5. Die Vorderflanke 6 geht dabei stetig in die Spitze 9 über, also ohne Ausbildung einer Kante oder Stufe. Im Gegensatz dazu ist beim Übergang von der Spitze 9 in die Rückflanke 7 eine relativ deutlich ausgeprägte Kante vorhanden. Dies führt zum Strömungsabriss. Dadurch wird das Ausbilden einer quasi stationären Grenzschicht verhindert.

Die Fluidleitung 1 ist in diesem Beispiel als extrudiertes Polyamidrohr ausgebildet. Aber auch andere Ausgestaltungen sind möglich. So kann die Fluidleitung beispielsweise auch ein metallisches Material aufweisen.

Eine Außenkontur 10 der Fluidleitung 1 folgt dabei der Innenkontur 2, ist also parallel zur Innenkontur 2 ausgebildet. Damit wird eine relativ flexible Fluidleitung 1 erhalten. Gleichzeitig kann die Fluidleitung 1 mit einer konstanten Materialstärke ausgebildet werden. Dabei wird durch die Ausbildung der Wellenberge und Wellentäler eine gewünschte Flexibilität der Fluidleitung erhalten. Durch die entsprechend ausgebildete Innenkontur wird dabei gegenüber herkömmlichen Wellrohren ein Strömungswiderstand verringert und damit Strömungsverluste klein gehalten. Die Innenkontur mit den Wellenbergen und Wellentälern wird dabei gleichzeitig dazu ausgenutzt, das Ausbilden einer quasi stationären Grenzschicht zu verhindern. So ist es möglich, eine Wellrohrleitung zu erhalten, deren Strömungsverluste sich an die von Glattrohren, also von Leitungen mit zylindrischen Innenflächen, annähern. Allerdings ist die Fluidleitung dafür nur in einer Durchflussrichtungsströmung optimiert. Dies kann allerdings auch dazu ausgenutzt werden, eine Strömungsrichtung zu messen, da ein Strömungswiderstand von der Strömungsrichtung abhängig ist. Ein Strömungswiderstand lässt sich durch einen dabei auftretenden Druckverlust relativ einfach messen.

Insgesamt wird so eine Fluidleitung erhalten, die eine durchflussoptimierte und richtungsgebundene Innenkontur aufweist. Dabei kann die Flexibilität eines Wellrohres erhalten bleiben, ohne die bisher bei Wellrohren auftretenden Strömungsverluste in Kauf nehmen zu müssen. Insgesamt erweitert sich damit der Einsatzbereich der Fluidleitung.

## Patentansprüche

1. Fluidleitung (1) mit einer Innenkontur (2), wobei die Innenkontur (2) Wellenberge (4) und Wellentäler (5) aufweist, wobei die Wellenberge (4) jeweils eine Vorderflanke (6),eine Rückflanke (7) und eine Wellenspitze (9) aufweisen, und wobei die Vorderflanke (6) einen flacheren Neigungswinkel als die Rückflanke (7) aufweist, **dadurch gekennzeichnet, dass** die Wellenspitze (9) und das Wellental (5) plateauförmig ausgebildet sind, wobei die Wellenspitze (9) eine größere axiale Erstreckung aufweist als das Wellental (5),

2. Fluidleitung (1) nach Anspruch 1, **dadurch gekennzeichnet, dass** die Fluidleitung (1) als Wellrohr ausgebildet ist und eine Außenkontur (10) aufweist, die parallel zur Innenkontur (2) verläuft.

3. Fluidleitung (1) nach Anspruch 1 oder 2, **dadurch gekennzeichnet, dass** die Vorderflanke (6) einen Neigungswinkel im Bereich von 50° bis 70° und die Rückflanke (7) einen Neigungswinkel im Bereich von 80° bis 90° aufweist.

4. Fluidleitung (1) nach einem der Ansprüche 1 bis 3, **dadurch gekennzeichnet, dass** die Vorderflanke (6) konvex ausgebildet ist.

5. Fluidleitung (1) nach einem der Ansprüche 1 bis 4, **dadurch gekennzeichnet, dass** die Rückflanke (7) eben ausgebildet ist.

6. Fluidleitung (1) nach einem der Ansprüche 1 bis 5, **dadurch gekennzeichnet, dass** sie als extrudiertes Kunststoffrohr, insbesondere als extrudiertes Polyamidrohr ausgebildet ist.

## Claims

1. Fluid line (1) comprising an inner contour (2), wherein the inner contour (2) has wave peaks (4) and wave troughs (5), wherein the wave peaks (4) each have a front flank (6), a rear flank (7) and a wave tip (9), and wherein the front flank (6) has a flatter angle of inclination than the rear flank (7), **characterised in that** the wave tip (9) and the wave trough (5) are designed to be plateau-like, wherein the wave tip (9) has a larger axial extension than the wave trough (5).

2. Fluid line (1) according to claim 1, **characterised in that** the fluid line (1) is designed as a corrugated pipe and has an outer contour (10) which runs parallel to the inner contour (2).

3. Fluid line (1) according to either claim 1 or 2, **characterised in that** the angle of inclination of the front flank (6) is in the range of 50° to 70° and the angle of inclination of the rear flank (7) is in the range of 80° to 90°.

4. Fluid line (1) according to any one of claims 1 to 3, **characterised in that** the front flank (6) is designed to be convex.

5. Fluid line (1) according to any one of claims 1 to 4, **characterised in that** the rear flank (7) is designed to be flat.

6. Fluid line (1) according to any one of claims 1 to 5, **characterised in that** it is designed as an extruded plastic pipe, in particular as an extruded polyamide pipe.

## Revendications

1. Conduite de fluide (1) comprenant un contour interne (2), dans laquelle le contour interne (2) comprend des crêtes d'ondulations (4) et des creux d'ondulations (5), dans laquelle les crêtes d'ondulations (4) présentent respectivement un flanc avant (6), un flanc arrière (7) et un sommet d'ondulation (9) et dans laquelle le flanc avant (6) présente un angle d'inclinaison moindre que celui du flanc arrière (7), **caractérisée en ce que** le sommet d'ondulation (9) et la crête d'ondulation (5) sont conformées en palier, dans laquelle le sommet d'ondulation (9) présente une extension axiale plus grande que la crête d'ondulation (5).

2. Conduite de fluide (1) selon la revendication 1, **caractérisée en ce que** la conduite de fluide (1) se présente sous la forme d'un tube ondulé et présente un contour externe (10) qui s'étend parallèlement au contour interne (2).

3. Conduite de fluide (1) selon la revendication 1 ou la revendication 2, **caractérisée en ce que** le flanc avant (6) présente un angle d'inclinaison dans la plage de 50 à 70° et le flanc arrière (7) un angle d'inclinaison dans la plage de 80 à 90°.

4. Conduite de fluide (1) selon l'une quelconque des revendications 1 à 3, **caractérisée en ce que** le flanc avant (6) a une forme convexe.

5. Conduite de fluide (1) selon l'une quelconque des revendications 1 à 4, **caractérisée en ce que** le flanc arrière (7) est conformé à plat.

6. Conduite de fluide (1) selon l'une quelconque des revendications 1 à 5, **caractérisée en ce qu'**elle se présente sous la forme d'un tube de matière plastique extrudé, en particulier d'un tube de polyamide extrudé.
